# EUROPÄISCHE PATENTANMELDUNG

(11) **EP 3 032 116 A1**
(43) Veröffentlichungstag der Anmeldung: **15.06.2016**
(21) Anmeldenummer: 14197700.9
(22) Anmeldetag: 12.12.2014
(51) Int. Cl.: F16B 13/00, F16B 15/08, F16B 27/00

(54) **Magazinstreifen**

(71) Anmelder: HILTI Aktiengesellschaft, 9494 Schaan (LI)
(72) Erfinder: Erhardt, Rolf, 9470 Buchs SG (CH); Gully, Stéphane, 6830 Rankweil (AT)
(74) Vertreter: Hilti Aktiengesellschaft Corporate Intellectual Property

(57) **Zusammenfassung**

Die Erfindung betrifft einen Magazinstreifen (10) mit Aufnahmeelementen (2) für jeweils ein Befestigungselement.

Um die Herstellung von hochfunktionellen Magazinstreifen mit komplexen Geometrien zu vereinfachen, weisen die Aufnahmeelemente (2) für ein Befestigungselement jeweils zwei Führungsstrukturen (14,15) auf, die einstückig miteinander verbunden sind und, im Querschnitt durch das Befestigungselement betrachtet, jeweils mindestens drei Führungspunkte für das Befestigungselement aufweisen.

## Beschreibung

### Technisches Gebiet

Die Erfindung betrifft einen Magazinstreifen mit Aufnahmeelementen für jeweils ein Befestigungselement. Die Erfindung betrifft des Weiteren ein Werkzeug zur Herstellung von derartigen Magazinstreifen. Die Erfindung betrifft des Weiteren ein Verfahren zur Herstellung von derartigen Magazinstreifen.

### Stand der Technik

Magazinstreifen, die auch als Befestigungselemente-Magazinstreifen bezeichnet werden, sind zum Beispiel aus der deutschen Patentschrift DE 10 2008 044 368 B3 und der amerikanischen Offenlegungsschrift US 2003/136693 A1 bekannt. Darüber hinaus ist aus dem US-Patent US 3,878,663 eine Vorrichtung zur Streifenmontage von Befestigungselementen für die Verwendung in Verbindung mit einem metallhaftenden thermoplastischen Band und mit Befestigungselementen mit langgestreckten Schäften bekannt.

### Darstellung der Erfindung

Aufgabe der Erfindung ist es, die Herstellung von hochfunktionellen Magazinstreifen mit komplexen Geometrien zu vereinfachen.

Die Aufgabe ist bei einem Magazinstreifen mit Aufnahmeelementen für jeweils ein Befestigungselement dadurch gelöst, dass die Aufnahmeelemente für ein Befestigungselement jeweils zwei Führungsstrukturen aufweisen, die einstückig miteinander verbunden sind und, im Querschnitt durch das Befestigungselement betrachtet, jeweils mindestens drei Führungspunkte für das Befestigungselement aufweisen. Dadurch wird zum einen eine besonders stabile Führung der Befestigungselemente in den Aufnahmeelementen ermöglicht. Der Magazinstreifen mit den Aufnahmeelementen ist vorzugsweise aus Kunststoff gebildet und kann zum Beispiel in einem Spritzgussverfahren kostengünstig in großen Stückzahlen hergestellt werden. Bei den Befestigungselementen handelt es sich zum Beispiel um Nägel, die mit Hilfe eines sogenannten Bolzsetzgeräts in einem Untergrund eingetrieben werden. Die beiden Führungsstrukturen ermöglichen darüber hinaus eine besonders einfache Herstellung ohne Verwendung von Stiften zum Erzeugen einer Führungsgeometrie in dem jeweiligen Aufnahmeelement.

Ein bevorzugtes Ausführungsbeispiel des Magazinstreifens ist dadurch gekennzeichnet, dass die Führungsstrukturen, im Querschnitt durch das Befestigungselement betrachtet, jeweils vier Führungspunkte für das Befestigungselement aufweisen. Dadurch wird eine besonders effektive Führung im Betrieb des erfindungsgemäßen Magazinstreifens sichergestellt.

Ein weiteres bevorzugtes Ausführungsbeispiel des Magazinstreifens ist dadurch gekennzeichnet, dass die Führungsstrukturen im Wesentlichen ringförmig gestaltet sind. Ringförmig bedeutet in diesem Zusammenhang, dass die Führungsstrukturen als Ring ausgeführt sein können. Die Führungsstrukturen können in diesem Zusammenhang aber auch eine von der idealen Ringgestalt abweichende Form aufweisen.

Ein weiteres bevorzugtes Ausführungsbeispiel des Magazinstreifens ist dadurch gekennzeichnet, dass eine erste Führungsstruktur in einer bezogen auf eine Befestigungselementlängsachse radialen Richtung außen größer als eine zweite Führungsstruktur ist. Das liefert unter anderem den Vorteil, dass die beiden Führungsstrukturen durch unterschiedliche Werkzeughälften eines Werkzeugs, zum Beispiel eines Spritzgusswerkzeugs, erzeugt werden können.

Ein weiteres bevorzugtes Ausführungsbeispiel des Magazinstreifens ist dadurch gekennzeichnet, dass die Führungsstrukturen durch Längsstege einstückig miteinander verbunden sind. Durch die Längsstege können die Führungsstrukturen stabil miteinander verbunden werden. Darüber hinaus können die Längsstege kostengünstig, zum Beispiel im Spritzgussverfahren, mit einem geeigneten Werkzeug hergestellt werden.

Die oben angegebene Aufgabe ist bei einem Werkzeug zur Herstellung von vorab beschriebenen Magazinstreifen alternativ oder zusätzlich dadurch gelöst, dass das Werkzeug als Auf-/Zuwerkzeug ausgeführt ist. Auf-/Zuwerkzeug bedeutet, dass das erfindungsgemäße Werkzeug, insbesondere ein erfindungsgemäßes Spritzgusswerkzeug, zwei Werkzeughälften umfasst, die zum Schließen des Werkzeugs aufeinander zu bewegt werden. Nach einem Einspritzvorgang werden die beiden Werkzeughälften in der entgegengesetzten Richtung voneinander weg bewegt.

Ein bevorzugtes Ausführungsbeispiel des Werkzeugs ist dadurch gekennzeichnet, dass das Werkzeug eine erste Werkzeughälfte, in der zumindest teilweise, eine erste Führungsstruktur erzeugt wird, und eine zweite Werkzeughälfte umfasst, in der, zumindest teilweise, eine zweite Führungsstruktur erzeugt wird. Das liefert den Vorteil, dass der erfindungsgemäße Magazinstreifen mit den beiden Führungsstrukturen besonders vorteilhaft ohne die Verwendung von Stiften zum Erzeugen einer Führungsgeometrie für ein Befestigungselement in dem jeweiligen Aufnahmeelement hergestellt werden kann.

Ein weiteres bevorzugtes Ausführungsbeispiel des Werkzeugs ist dadurch gekennzeichnet, dass eine Öffnungsrichtung des Werkzeugs parallel zu einer beziehungsweise der Befestigungselementlängsachse ist. Die Öffnungsrichtung des Werkzeugs ist vorzugsweise auch senkrecht oder quer zu einer Streifenlängsachse des Magazinstreifens.

Ein weiteres bevorzugtes Ausführungsbeispiel des Werkzeugs ist dadurch gekennzeichnet, dass eine Öffnungsrichtung des Werkzeugs quer zu einer beziehungsweise der Befestigungselementlängsachse ist. Die Öffnungsrichtung ist vorzugsweise auch quer zu einer Streifenlängsachse des Magazinstreifens. Quer bedeutet insbesondere senkrecht.

Die Erfindung betrifft auch ein Verfahren zur Herstellung von vorab beschriebenen Magazinstreifen, insbesondere mit einem vorab beschriebenen Werkzeug. Die beiden Führungsstrukturen des Magazinstreifens werden vorzugsweise, zumindest teilweise, in unterschiedlichen Werkzeughälften erzeugt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine perspektivische Darstellung eines geöffneten Werkzeugs zur Herstellung eines Magazinstreifens gemäß einem ersten Ausführungsbeispiel;
- Figur 2: ein ähnliches Werkzeug wie in Figur 1 gemäß einem zweiten Ausführungsbeispiel;
- Figur 3: ein ähnliches Ausführungsbeispiel wie in Figur 2 gemäß einem dritten Ausführungsbeispiel;
- Figur 4: eine perspektivische Darstellung eines Werkzeugs zur Herstellung von Magazinsteifen in einem Endlosverfahren; die
- Figur 5 bis 8: jeweils ein Aufnahmeelement eines erfindungsgemäßen Magazinstreifens in verschiedenen Ausführungsformen;
- Figur 9: eine vereinfachte Darstellung zur Veranschaulichung der Verwendung eines erfindungsgemäßen Magazinstreifens mit einem Bolzensetzgerät und
- Figur 10: die Ansicht eines Schnitts entlang der Linie X-X in Figur 9.

### Ausführungsbeispiele

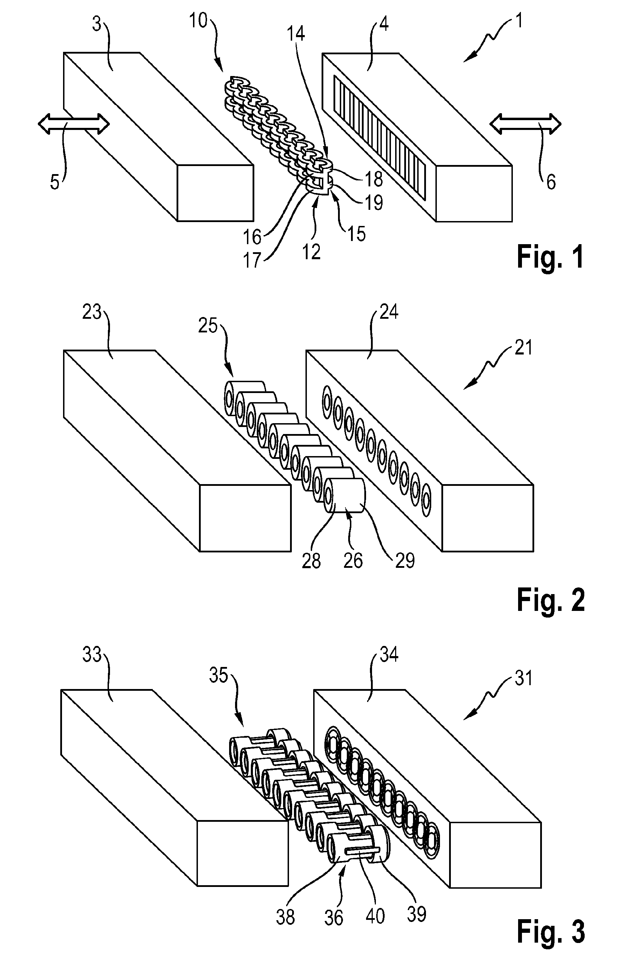

In den Figuren 1 bis 3 sind drei Ausführungsbeispiele eines Spritzgusswerkzeugs 1; 21; 31 perspektivisch dargestellt. Die Spritzgusswerkzeuge 1; 21; 31 sind als Auf-/Zuwerkzeuge mit zwei Werkzeughälften 3, 4; 23, 24; 33, 34 ausgeführt.

Durch Doppelpfeile 5 und 6 sind in Figur 1 Öffnungs- und Schließbewegungen der Werkzeughälften 3, 4 angedeutet. Zum Schließen des Spritzgusswerkzeugs 1 werden die Werkzeughälften 3, 4 aufeinander zu bewegt. Zum Öffnen des Spritzgusswerkzeugs 1 werden die Werkzeughälften 3, 4 voneinander weg bewegt.

Zwischen den beiden Werkzeughälften 3, 4 ist ein Magazinstreifen 10 perspektivisch dargestellt. Der Magazinstreifen 10 umfasst eine Vielzahl von Aufnahmeelementen 12. Die Aufnahmeelemente 12 sind gleich ausgeführt und einstückig miteinander verbunden, um den Magazinstreifen 10 darzustellen. Das Aufnahmeelement 12 umfasst ein Durchgangsloch, das zur Aufnahme eines (in Figur 1 nicht dargestellten) Befestigungselements dient.

Zur Führung des Befestigungselements umfasst das Aufnahmeelement 12 zwei Führungsstrukturen 14, 15. Die Führungsstruktur 14 an dem in Figur 1 oberen Ende des Aufnahmeelements 12 wird von zwei halbkreisbogenförmigen Körpern 16, 18 begrenzt. Die in Figur 1 am unteren Ende des Aufnahmeelements 12 ausgebildete Führungsstruktur 15 umfasst zwei halbkreisbogenförmige Führungskörper 17, 19.

Die Führungskörper 16, 17 werden in der Werkzeughälfte 3 geformt. Die Führungskörper 18, 19 werden in der Werkzeughälfte 4 geformt. Durch die Anordnung und Gestaltung der Führungskörper 16 bis 19 können die Führungsstrukturen 14, 15 des Aufnahmeelements 12 besonders vorteilhaft mit dem Auf-/Zuwerkzeug 1 hergestellt werden, ohne dass zusätzliche Stifte benötigt werden.

Nach dem Herstellen des Magazinstreifens 10 im Spritzgussverfahren können in einem nachfolgenden Arbeitsschritt die Befestigungselemente in die Aufnahmeelemente 12 des Magazinstreifens 10 eingeführt werden.

Die durch die Doppelpfeile 5 und 6 angedeutete Öffnungsrichtung und Schließrichtung des Spritzgusswerkzeugs 1 verläuft quer oder senkrecht zu einer Längsachse des Magazinstreifens 10. Darüber hinaus erstreckt sich die Öffnungsrichtung und Schließrichtung des Spritzgusswerkzeugs 1 ebenfalls senkrecht oder quer zu einer Befestigungselementlängsachse.

In Figur 2 ist zwischen den Werkzeughälften 23 und 24 ein Magazinstreifen 25 mit einer Vielzahl von Aufnahmeelementen 26 angedeutet. Die Aufnahmeelemente 26 haben jeweils die Gestalt eines geraden Kreiszylindermantels mit einem zentralen Durchgangsloch, durch das in einem nachfolgenden Arbeitsschritt ein Befestigungselement hindurchgesteckt werden kann.

Eine Befestigungselementlängsachse verläuft parallel zur Öffnungs- und Schließrichtung des Spritzgusswerkzeugs 21. Ein der Werkzeughälfte 23 zugewandte Hälfte des Aufnahmeelements 26 stellt eine Führungsstruktur 28 dar. Eine der Werkzeughälfte zugewandte Hälfte des Aufnahmeelements 26 stellt eine Führungsstruktur 29 dar.

In Figur 3 ist zwischen den beiden Werkzeughälften 33 und 34 ein Magazinstreifen 35 mit einer Vielzahl von Aufnahmeelementen 36 perspektivisch dargestellt. Die Aufnahmeelemente 36 sind gleich ausgeführt und einstückig miteinander verbunden, wie bei dem vorangegangenen Ausführungsbeispiel.

Das Aufnahmeelement 36 umfasst zwei Führungsstrukturen 38 und 39, die durch Längsstege 40 einstückig miteinander verbunden sind. Die beiden Führungsstrukturen 38, 39 sind als Ringkörper ausgeführt.

Der Ringkörper, der die Führungsstruktur 38 darstellt, hat aber einen kleineren Außendurchmesser als der Ringkörper, der die Führungsstruktur 39 darstellt. Dadurch werden das Herstellen und insbesondere das Entformen des Magazinstreifens 35 mit dem Spritzgusswerkzeug 31 erheblich vereinfacht.

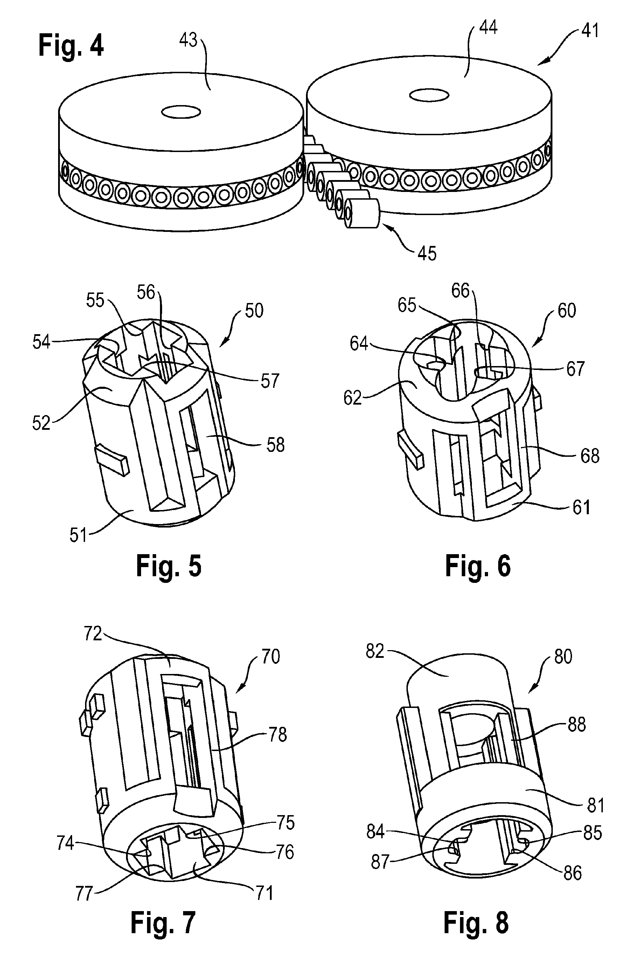

In Figur 4 ist ein Werkzeug 41 mit zwei rund Werkzeugkörpern 43, 44 perspektivisch dargestellt. Zwischen den beiden Werkzeugkörpern 43 und 44 ist ein Magazinstreifen 45 perspektivisch dargestellt. Der Magazinstreifen 45 ist genauso ausgeführt wie der Magazinstreifen 26 in Figur 2. Allerdings kann der Magazinstreifen 45 mit dem Werkzeug 41 im Endlosverfahren hergestellt werden.

In den Figuren 5 bis 8 sind vier verschiedene Ausführungsbeispiele von Aufnahmeelementen 50; 60; 70; 80 perspektivisch dargestellt. Die Aufnahmeelemente 50; 60; 70; 80 umfassen jeweils zwei Führungsstrukturen 51, 52; 61, 62; 71, 72; 81, 82.

Die Führungsstrukturen 51, 52; 61, 62; 71, 72; 81, 82 der Aufnahmeelemente 50; 60; 70; 80 sind durch Längsstege 58; 68; 78; 88 einstückig miteinander verbunden. Dabei sind die Führungsstrukturen 51, 52; 61, 62; 71, 72; 81, 82 und die Längsstege 58; 68; 78; 88 so ausgeführt und angeordnet, dass die Herstellung und insbesondere die Entformung mit einem Auf-/Zuwerkzeug, wie es zum Beispiel in Figur 3 dargestellt ist, ohne Verwendung zusätzlicher Stifte durchgeführt werden kann.

Darüber hinaus sieht man in den Figuren 5 bis 8, dass die Führungsstrukturen 51, 52; 61, 62; 71, 72; 81, 82, im Querschnitt durch eine Befestigungselementlängsachse betrachtet, jeweils vier Führungspunkte 54 bis 57; 64 bis 67; 74 bis 77; 84 bis 87 für ein Befestigungselement aufweisen.

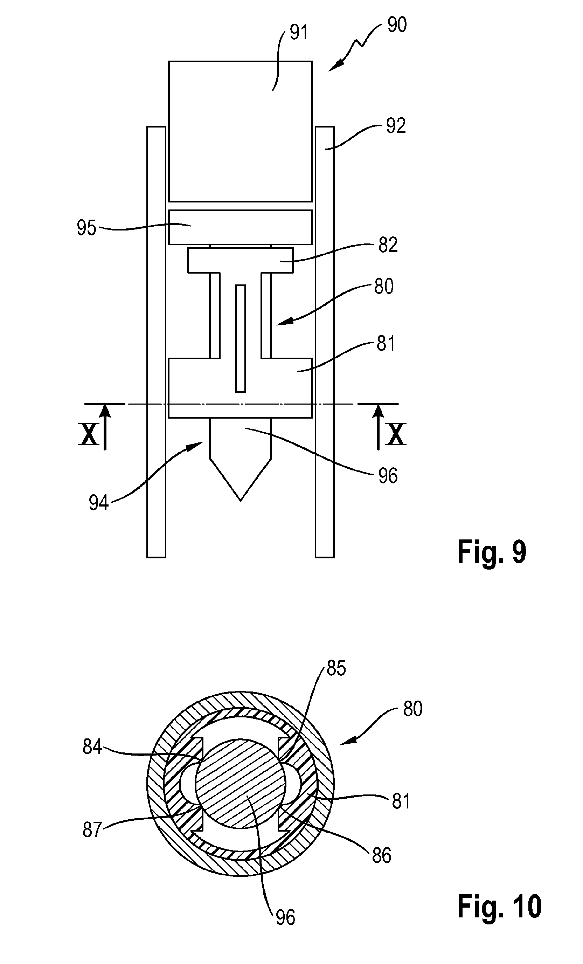

In den Figuren 9 und 10 ist stark vereinfacht ein Bolzensetzgerät 90 mit einem Kolben 91 und einer Bolzenführung 92 im Längsschnitt dargestellt. Durch den Kolben 91 wird ein Kopf 95 eines Befestigungselements 94 in Figur 9 von oben mit einer Eintreibkraft beaufschlagt. Bei dem Befestigungselement 94 handelt es sich um einen Nagel, der einen Schaft 96 mit einer Spitze aufweist, mit welcher das Befestigungselement 94 in einen (nicht dargestellten) Untergrund eingetrieben werden kann.

Der Schaft 96 des Befestigungselements 94 erstreckt sich durch ein Aufnahmeelement 80 hindurch, wie es in Figur 8 perspektivisch dargestellt ist. Der Kopf 95 des Befestigungselements 94 ist zwischen der Führungsstruktur 82 und dem Kolben 91 innerhalb der Bolzenführung 92 angeordnet. Das in Figur 9 untere Ende des Schafts 96 des Befestigungselements 94 ist durch die Führungsstruktur 81 des Aufnahmeelements 80 geführt.

In der Schnittdarstellung der Figur 10 sieht man, dass der Schaft 96 des Befestigungselements an genau vier Führungspunkten 84 bis 87 an der Führungsstruktur 81 anliegt und geführt ist.

## Patentansprüche

1. Magazinstreifen (10;25;35;45) mit Aufnahmeelementen (2;26;36;50;60;70;80) für jeweils ein Befestigungselement (94), **dadurch gekennzeichnet, dass** die Aufnahmeelemente (2;26;36;50;60;70;80) für ein Befestigungselement (94) jeweils zwei Führungsstrukturen (14,15;28,29;38,39;51,52;61,62;71,72;81,82) aufweisen, die einstückig miteinander verbunden sind und, im Querschnitt durch das Befestigungselement (94) betrachtet, jeweils mindestens drei Führungspunkte (54-57;64-67;74-77;84-87) für das Befestigungselement (94) aufweisen.

2. Magazinstreifen nach Anspruch 1, **dadurch gekennzeichnet, dass** die Führungsstrukturen (14,15;28,29;38,39;51,52;61,62;71,72;81,82), im Querschnitt durch Befestigungselement (94) betrachtet, jeweils vier Führungspunkte (54-57;64-67;74-77;84-87) für das Befestigungselement (94) aufweisen.

3. Magazinstreifen nach einem der vorhergehenden Ansprüche, **dadurch gekennzeichnet, dass** die Führungsstrukturen (14,15;28,29;38,39;51,52;61,62;71,72;81,82) im Wesentlichen ringförmig gestaltet sind.

4. Magazinstreifen nach einem der vorhergehenden Ansprüche, **dadurch gekennzeichnet, dass** eine erste Führungsstruktur (81) in einer bezogen auf eine Befestigungselementlängsachse radialen Richtung außen größer als eine zweite Führungsstruktur (82) ist.

5. Magazinstreifen nach einem der vorhergehenden Ansprüche, **dadurch gekennzeichnet, dass** die Führungsstrukturen (14,15;28,29;38,39;51,52;61,62;71,72;81,82) durch Längsstege (58;68;78;88) einstückig miteinander verbunden sind.

6. Werkzeug (1;21;31) zur Herstellung von Magazinstreifen (10;25;35;45) nach einem der vorhergehenden Ansprüche, **dadurch gekennzeichnet, dass** das Werkzeug (1;21;31) als Auf-/Zuwerkzeug ausgeführt ist.

7. Werkzeug nach Anspruch 6, **dadurch gekennzeichnet, dass** das Werkzeug (1;21;31) eine erste Werkzeughälfte (3;23;33), in der, zumindest teilweise, eine erste Führungsstruktur (16,17;28;38) erzeugt wird, und eine zweite Werkzeughälfte (4;24;34) umfasst, in der, zumindest teilweise, eine zweite Führungsstruktur (18,19;29;39) erzeugt wird.

8. Werkzeug nach Anspruch 6 oder 7, **dadurch gekennzeichnet, dass** eine Öffnungsrichtung des Werkzeugs (21;31) parallel zu einer beziehungsweise der Befestigungselementlängsachse ist.

9. Werkzeug nach Anspruch 6 oder 7, **dadurch gekennzeichnet, dass** eine Öffnungsrichtung des Werkzeugs (1) quer zu einer beziehungsweise der Befestigungselementlängsachse ist.

10. Verfahren zur Herstellung von Magazinstreifen (10;25;35;45) nach einem der Ansprüche 1 bis 5, insbesondere mit einem Werkzeug (1;21;31) nach einem der Ansprüche 6 bis 9.
